# FASCICULE DE BREVET EUROPEEN

(11) **EP 1 168 177 B1**
(45) Date de publication et mention de la délivrance du brevet: **29.03.2006**
(21) Numéro de dépôt: 01401469.0
(22) Date de dépôt: 07.06.2001
(51) Int. Cl.: G06F 11/14

(54) **Machine informatique avec système de gestion de fichiers sur disque tolérante aux arrêts brutaux**
Informationsmaschine mit Dateiverwaltungssystem auf einer Platte, die schlagartige Stops toleriert
Information machine with file management system on disk tolerating abrupt stops

(30) Priorité: 20.06.2000 FR 0007862
(43) Date de publication de la demande: 02.01.2002
(73) Titulaire: BULL S.A., 78430 Louveciennes (FR)
(72) Inventeur: Cunchon, François, 78114 Magny les Hameaux (FR); Planes, Michael, 78170 La Celle Saint-Cloud (FR); Nguyen, Van-Dung, 94450 Limeil Brevannes (FR)

(56) Documents cités:
- EP-A- 0 917 060
- WO-A-97/31315
- US-A- 5 708 776
- COHEN F B: "A NOTE ON HIGH-INTEGRITY PC BOOTSTRAPPING*" COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, vol. 10, no. 6, 1 octobre 1991 (1991-10-01), pages 535-539, XP000264764 ISSN: 0167-4048

## Description

Le domaine de l'invention est celui des machines informatiques et concerne plus particulièrement leur démarrage.

De façon connue, une machine informatique fonctionne au moyen d'un système d'exploitation qui gère ses ressources pour exécuter des processus. Le système d'exploitation réside généralement sur une mémoire de masse de la machine. La mémoire de masse est une mémoire permanente telle qu'un disque dur.

Lorsque la machine démarre, son micrologiciel lance une fonction d'amorçage résidente à une adresse déterminée de la mémoire de masse. La fonction d'amorçage active le système d'exploitation qui se construit des structures de données à partir d'informations résidentes sur la mémoire de masse. Les structures de données servent par exemple à allouer et gérer des zones mémoires mises à disposition de processus à exécuter. Pendant le fonctionnement de la machine, le système d'exploitation adapte ces structures de données à l'évolution des processus en cours d'exécution. De façon à ne pas encombrer la mémoire vive et à pouvoir retrouver ces structures de données après un arrêt de la machine, le système d'exploitation sauvegarde régulièrement les structures de données sur la mémoire de masse.

Si la machine est arrêtée en suivant des règles préétablies, le système d'exploitation met les structures de données dans un état cohérent et les sauvegarde sur la mémoire de masse. Ainsi, la machine est arrêtée dans un état sauvegardé cohérent qui lui permettra de redémarrer dans un état qui tient compte des processus exécutés avant son arrêt.

Si la machine est arrêtée sans suivre les règles préétablies, par exemple en cas de réinitialisation brutale ou de mise hors tension intempestive, il se peut que les structures de données ne soient pas sauvegardées dans un état cohérent, le système d'exploitation ne les ayant par exemple écrites sur la mémoire de masse que partiellement. Lors d'un redémarrage de la machine, le montage du système d'exploitation détecte alors des incohérences et génère un signal de faute. Au moyen d'une interface opérateur, il est alors nécessaire à un opérateur humain d'intervenir pour réparer ou tout au moins acquitter la faute. Ceci peut s'avérer fastidieux et nécessite outre la présence d'un opérateur humain, l'existence d'une interface opérateur.

Pour pallier à ces inconvénients, EP917060 décrit une machine informatique comprenant une mémoire vive et une mémoire de masse sur laquelle est stocké un système d'exploitation, ladite mémoire de masse contenant une partition accessible uniquement en lecture au système d'exploitation, ladite partition contenant :
- les données nécessaires à un démarrage en configuration minimale de la machine
- une fonction d'amorçage utilisant ladite partition
- redémarrer la machine après acquittement d'une faute

L'invention actuelle est réalisée par une machine informatique selon la revendication 1 et un procédé correspondant selon la revendication 6.

Pour pallier les inconvénients ci-dessus mentionnés, un objet de l'invention est une machine informatique comprenant une mémoire vive et une mémoire de masse sur laquelle est stocké un système d'exploitation. La machine informatique est caractérisée en ce que la mémoire de masse comprend une partition accessible uniquement en lecture au système d'exploitation, ladite partition contenant une fonction d'amorçage, une fonction de réparation automatique et une fonction de montage du dit système d'exploitation.

La partition n'étant pas accessible en écriture au système d'exploitation, celui-ci ne peut pas corrompre son contenu pendant un fonctionnement de la machine. Ainsi, quelles que soient les conditions dans lesquelles le fonctionnement de la machine est interrompu, celle-ci est capable de redémarrer sur une configuration minimale avec le contenu de la partition uniquement accessible en lecture. La fonction de réparation automatique, elle-même résidente sur cette partition permet d'acquitter toute faute détectée pendant le montage du système d'exploitation sans nécessiter d'intervention humaine.

D'autres détails et avantages de l'invention ressortent de la description qui suit en référence aux figures où :
- la figure 1 présente une machine conforme à l'invention ;
- la figure 2 présente un procédé conforme à l'invention.

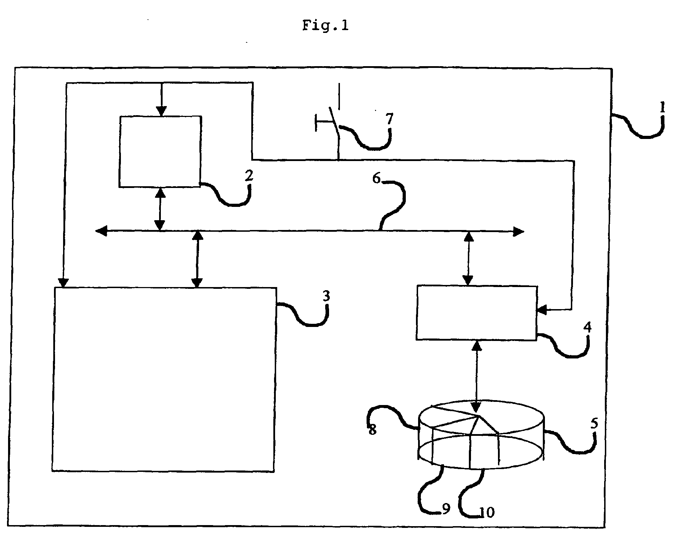

En référence à la figure 1, une machine 1 comprend un microprocesseur 2, une mémoire vive 3, une mémoire de masse 5 et un bus 6 qui permet au microprocesseur 2, d'accéder à la mémoire vive 3 et à la mémoire de masse 5 au moyen d'un contrôleur 4. Un bouton poussoir 7 permet de réinitialiser chacun des éléments 2, 3, 4 de la machine.

La mémoire de masse 5 est préférentiellement un disque magnétique qui permet à des données d'y rester sauvegardées dans un état précédant une mise hors tension ou une réinitialisation de la machine.

La mémoire de masse 5 contient du code et des données d'un système d'exploitation (Operating System en anglais) pour gérer le fonctionnement de la machine 1. La mémoire de masse 5 contient aussi du code et des données de fonctions applicatives exécutées par la machine 1.

La mémoire de masse 5 comprend plusieurs partitions 8, 9, 10. La partition 8 est accessible en lecture seule au système d'exploitation. C'est à dire que le code et les données stockées sur la partition 8 ne peuvent pas être modifiées lorsque la machine 1 est en fonctionnement.

La partition 8 contient le code d'une fonction d'amorçage et d'une fonction de montage du système d'exploitation. La fonction d'amorçage sert au moment d'une initialisation de la machine 1, à lancer le système d'exploitation. La fonction de montage sert, au moment du lancement du système d'exploitation, à construire un environnement d'exécution pour le système d'exploitation. La partition 8 contient encore le code d'une fonction standard d'acquittement de faute et d'une fonction de réparation automatique, expliquées dans la suite de la description.

Le code de la fonction d'amorçage contient une première séquence d'instructions qui charge le contenu de la partition 8 en mémoire vive 3 et une deuxième séquence d'instruction qui appelle la fonction de réparation automatique alors chargée en mémoire vive.

Le code de la fonction de réparation automatique contient une troisième séquence d'instructions qui appelle la fonction de montage, alors chargée en mémoire vive, une quatrième séquence d'instruction qui appelle systématiquement la fonction standard d'acquittement lorsque la fonction de montage signale une faute et une cinquième séquence de code qui appelle la fonction d'amorçage au retour de la fonction standard d'acquittement.

De façon connue dans les systèmes d'exploitation de type UNIX tel que par exemple LINUX, la fonction de montage utilise et construit des structures de données telles que des tables pour gérer, des fichiers. Pendant le fonctionnement de la machine, le système d'exploitation fait vivre ces structures de données en les adaptant aux processus exécutés par la machine. Ces structures de données sont habituellement sauvegardées en mémoire de masse de sorte à pouvoir être réutilisées lorsque la machine est redémarrée suite à un arrêt ou une initialisation qui laisse ces structures de données dans un état cohérent. Suite à une mise hors tension ou plus généralement à une réinitialisation, intempestive, il se peut que ces structures de données soient incohérentes. Lorsque la fonction de montage construit les structures de données en s'appuyant sur des structures de données sauvegardées sur la mémoire de masse, la fonction de montage signale une faute si elle détecte une incohérence. Habituellement, la faute signalée est communiquée par un message sur un écran de la machine de façon à permettre à un opérateur humain de réparer au mieux la faute s'il dispose des informations nécessaires pour le faire. En solution de secours, la fonction de montage propose à l'opérateur humain un choix d'appel à la fonction standard d'acquittement.

La fonction standard d'acquittement cherche à réparer une faute signalée à partir des seules données dont elle dispose sur la mémoire de masse. Si ces données ne sont pas suffisantes, la fonction standard acquitte néanmoins la faute, acceptant ainsi de perdre le bénéfice des structures de données pour lesquelles la faute a été détectée.

En absence de fautes, la fonction de montage poursuit le lancement du système d'exploitation de la partie (9).

L'intérêt de la fonction de réparation automatique est qu'elle évite à un opérateur humain d'intervenir. Au lieu d'envoyer un message sur écran, la fonction de réparation automatique appelle systématiquement la fonction d'acquittement standard lorsque la fonction de montage signale une faute.

La partition 8, inaccessible en écriture au système d'exploitation, contient les données nécessaires à un démarrage en configuration minimale de la machine. La partition 9, accessible en lecture et en écriture, contient les structures de données mises à jour par le système d'exploitation en fonctionnement normal de la machine.

En appelant la fonction d'amorçage au retour de la fonction standard d'acquittement, le prochain appel de la fonction de montage au cycle suivant, ne détectera plus la faute acquittée dans ce cycle d'appel. Si besoin après plusieurs cycles appel de la fonction d'amorçage, appel de la fonction de montage, déclenchement de la fonction de réparation automatique, la fonction de montage ne détecte plus de fautes et poursuit le lancement du système d'exploitation.

Ainsi, la machine peut redémarrer, au moins dans une configuration minimale au moyen des structures de données de la partition 8 et des structures de données de la partition 9 pour lesquelles aucune incohérence n'a été détectée ou une incohérence a pu être réparée par la fonction standard d'acquittement, sans intervention de l'opérateur humain.

D'autres partitions telles que la partition 10, contiennent du code et des données de fonctions applicatives exécutables au moyen du système d'exploitation.

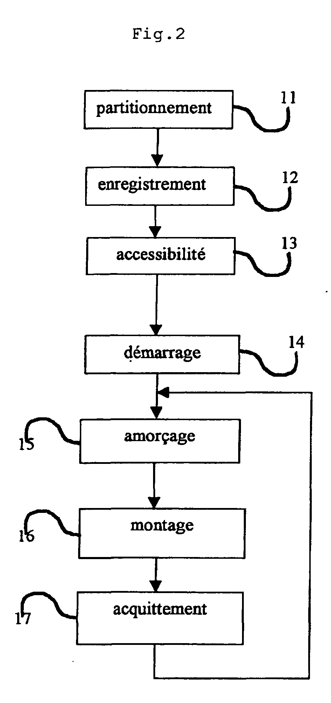

En référence à la figure 2, un procédé conforme à l'invention comprend une étape 11 qui crée sur la mémoire de masse au moins une partition 8.

Une étape 12 enregistre sur la partition 8, du code et des données d'une fonction d'amorçage, du code et des données d'une ou plusieurs fonctions minimales pour lancer un système d'exploitation telles que par exemple la fonction de montage "mount" et la fonction d'acquittement standard "fsck" du système d'exploitation LINUX, ainsi que la fonction de réparation automatique.

Une étape 13 déclare la partition 8 accessible uniquement en lecture au système d'exploitation à lancer.

Les étapes 11 à 13 sont préférentiellement exécutées en usine sur un disque qui monté dans la machine 1, constitue alors sa mémoire de masse. Les étapes suivantes sont mises en oeuvre dans la machine 1 elle-même.

Une étape 14 est déclenchée par démarrage ou initialisation de la machine 1 au moyen du bouton poussoir 7. L'étape 14 met à zéro l'ensemble des éléments de la machine 1 tels que la mémoire vive 3 et le contrôleur 4. L'étape 14 démarre le microprocesseur 2 au moyen d'un micrologiciel connu sous le nom de BIOS qui finit par brancher le microprocesseur 2 sur la fonction d'amorçage qui réside à une adresse spécifique de la partition 8.

Une étape 15 active la fonction d'amorçage qui charge le contenu de la partition 8 en mémoire vive, alors accessible en lecture et écriture par le système d'exploitation à lancer.

Une étape 16 active en mémoire vive 3, la fonction de réparation automatique qui appelle la fonction de montage. En absence de détection de faute par la fonction de montage, le lancement du système d'exploitation de la machine se poursuit avec lecture et écriture d'autres partitions du disque 5, pour démarrer automatiquement de façon connue des fonctions applicatives exécutables au moyen du système d'exploitation.

Une étape 17 est déclenchée par un signal de faute détectée par la fonction de montage. La fonction de réparation automatique appelle alors la fonction standard d'acquittement au retour de laquelle l'étape 15 est à nouveau déclenchée.

L'invention est particulièrement avantageuse lorsque la machine 1 est dépourvue d'écran et de clavier. C'est le cas d'un système embarqué ou le bouton poussoir 7 est éventuellement remplacé par une commande à distance. C'est encore le cas d'une boîte noire à l'intérieur de laquelle on ne souhaite pas qu'un opérateur humain puisse accéder. Il existe de telles boîtes noires avec une mémoire permanente dans laquelle est gravé un code exécutable complet de ses fonctionnalités. L'intérêt de la présence d'un disque selon l'invention avec un système d'exploitation est de donner à la boîte noire les avantages d'un ordinateur en terme de puissance de calcul et d'adaptabilité à des applications multiples et évolutives.

## Revendications

1. Machine informatique (1) comprenant:
une mémoire vive (3) et
une mémoire de masse (5) sur laquelle est stocké un système d'exploitation,
la mémoire de masse (5) est une mémoire montée dans la machine informatique (1),
la mémoire de masse (5) comprenant une partition (8) accessible uniquement en lecture au système d'exploitation,
ladite partition (8) accessible uniquement en lecture contenant: les données nécessaires à un démarrage en configuration minimale de la machine et
une fonction d'amorçage, utilisant la partition accessible uniquement en lecture
une fonction de montage dudit système d'exploitation accédant à la partition accessible en écriture et en lecture
une fonction de réparation automatique, pour acquitter une faute signalée par la fonction de montage et redemarrer la machine après acquittement de la faute et
en ce que la mémoire de masse (5) comprend également au moins une partition (9) accessible en écriture et en lecture au système d'exploitation,
ladite partition (9) accessible en écriture et en lecture.

2. Machine informatique selon la revendication 1, **caractérisée en ce que** ladite fonction d'amorçage comprend une première séquence de code pour charger le contenu de la partition (8) en mémoire vive (3) et une deuxième séquence de code pour activer en mémoire vive ladite fonction de réparation automatique.

3. Machine informatique selon la revendication 2, **caractérisée en ce que** ladite fonction de réparation automatique comprend une troisième séquence de code qui appelle ladite fonction de montage, exécutable en mémoire vive (3) avec possibilité d'écriture sur au moins une autre partition (9) de la mémoire de masse (5).

4. Machine informatique selon la revendication 1, **caractérisée en ce que** ladite partition (8) contient une fonction d'acquittement standard et **en ce que** la quatrième

5. Machine informatique selon l'une des revendications précédentes, **caractérisée en ce que** la mémoire de masse (5) est un disque dur.

6. Procédé pour mettre automatiquement en marche une machine informatique (1) comprenant une mémoire vive (3) et une mémoire de masse (5), qui comprend:
- une première étape (14) qui démarre la machine (1) au moyen d'un signal (7)
- une deuxième étape (15) qui charge automatiquement en mémoire vive (3), le contenu d'une partition (8) de la mémoire de masse (5) uniquement accessible en lecture, rendant ledit contenu accessible en lecture et écriture pour le système d'exploitation
- une troisième étape (16) qui monte automatiquement un système d'exploitation depuis la mémoire vive (3) en accordant àune partition accessible en écriture et en lecture et contenant des structures de données mises à jour par le système d'exploitation
- une quatrième étape (17) qui acquitte automatiquement toute faute signalée dans la troisième étape (16) et qui réactive la deuxième étape (15), afin de réaliser un redémarrage automatique en cas de faute signalée séquence de code appelle ladite fonction d'acquittement standard exécutable en mémoire vive avec possibilité d'écriture sur au moins une autre partition (9) de la mémoire de masse.

7. Procédé selon la revendication 6, **caractérisé en ce qu'**il comprend, en phase de fabrication de la machine (1) :
- une cinquième étape (11) qui crée des partitions (8,9) sur la mémoire de masse (5) ;
- une sixième étape (12) qui enregistre au moins une partie du système d'exploitation et des fonctions pour exécuter la deuxième, troisième et quatrième étapes (15,16,17), sur une première partition (8) ;
- une septième étape (14) qui déclare ladite première partition (8) uniquement accessible en lecture au dit système d'exploitation.

## Patentansprüche

1. Datenverarbeitungsmaschine (1), mit:
einem Direktzugriffsspeicher (3) und
einem Massenspeicher (5), in dem ein Betriebssystem gespeichert ist,
wobei der Massenspeicher (5) ein in der Datenverarbeitungsmaschine (1) installierter Speicher ist,
wobei der Massenspeicher (5) eine Partition (8) aufweist, für die das Betriebssystem nur einen Lesezugriff hat,
wobei die Partition (8), für die nur ein Lesezugriff besteht, enthält: die Daten, die für ein Hochfahren der Maschine in der Minimalkonfiguration notwendig sind, und
eine Boot-Funktion, die die Partition, für die nur ein Lesezugriff besteht, verwendet,
eine Funktion zur Installation des Betriebssystems, die auf die Partition zugreift, für die ein Schreib- und Lesezugriff besteht, und
eine Funktion zur automatischen Reparatur, die einen von der Installationsfunktion gemeldeten Fehler bestätigt und die Maschine nach der Bestätigung des Fehlers erneut hochfährt,
wobei der Massenspeicher (5) außerdem wenigstens eine Partition (9) umfasst, für die das Betriebssystem einen Schreib- und Lesezugriff hat, und
die Partition (9), für die ein Schreib- und Lesezugriff besteht, Datenstrukturen enthält, die durch das Betriebssystem aktualisiert werden.

2. Datenverarbeitungsmaschine nach Anspruch 1, **dadurch gekennzeichnet, dass** die Boot-Funktion eine erste Codefolge, um den Inhalt der Partition (8) in den Direktzugriffsspeicher (3) zu laden, und eine zweite Codefolge, um die Funktion zur automatischen Reparatur in dem Direktzugriffsspeicher zu aktivieren, umfasst.

3. Datenverarbeitungsmaschine nach Anspruch 2, **dadurch gekennzeichnet, dass** die Funktion zur automatischen Reparatur eine dritte Codefolge umfasst, die die Installationsfunktion aufruft, die im Direktzugriffsspeicher (3) mit der Möglichkeit des Schreibens in wenigstens eine weitere Partition (9) des Massenspeichers (5) ausführbar ist.

4. Datenverarbeitungsmaschine nach Anspruch 1, **dadurch gekennzeichnet, dass** die Partition (8) eine Standardbestätigungsfunktion enthält und dass die vierte Codefolge die Standardbestätigungsfunktion aufruft, die im Direktzugriffsspeicher mit der Möglichkeit des Schreibens in wenigstens eine weitere Partition (9) des Massenspeichers ausführbar ist.

5. Datenverarbeitungsmaschine nach einem der vorhergehenden Ansprüche, **dadurch gekennzeichnet, dass** der Massenspeicher (5) eine Festplatte ist.

6. Verfahren zum automatischen Starten einer Datenverarbeitungsmaschine (1), die einen Direktzugriffsspeicher (3) und einen Massenspeicher (5) enthält, das umfasst:
- einen ersten Schritt (14), der die Maschine (1) mittels eines Signals (7) hochfährt,
- einen zweiten Schritt (15), der den Inhalt einer Partition (8) des Massenspeichers (5), für die nur ein Lesezugriff besteht, automatisch in den Direktzugriffsspeicher (3) lädt und für den Inhalt einen Schreib- und Lesezugriff durch das Betriebssystem schafft,
- einen dritten Schritt (16), der aus dem Direktzugriffsspeicher (3) automatisch ein Betriebssystem installiert, indem er auf eine Partition zugreift, für die ein Schreib- und Lesezugriff besteht und die Datenstrukturen enthält, die durch das Betriebssystem aktualisiert werden,
- einen vierten Schritt (17), der jeden im dritten Schritt (16) gemeldeten Fehler automatisch bestätigt und den zweiten Schritt (15) erneut aktiviert, um ein automatisches erneutes Hochfahren im Fall eines gemeldeten Fehlers auszuführen.

7. Verfahren nach Anspruch 6, **dadurch gekennzeichnet, dass** es in der Fertigungsphase der Maschine (1) umfasst:
- einen fünften Schritt (11), der im Massenspeicher (5) Partitionen (8, 9) erzeugt;
- einen sechsten Schritt (12), der wenigstens einen Teil des Betriebssystems und Funktionen zum Ausführen des zweiten, des dritten und des vierten Schrittes (15, 16, 17) in eine erste Partition (8) aufzeichnet;
- einen siebten Schritt (14), der für die erste Partition (8) nur einen Lesezugriff durch das Betriebssystem erklärt.

## Claims

1. Data-processing machine (1) comprising:
- a random access memory (3) and
- a mass memory (5) on which an operating system is stored,
- the mass memory (5) is a memory mounted in the data-processing machine (1).
- the mass memory (5) comprising a partition (8) accessible to the operating system solely in read mode,
- said partition (8) accessible solely in read mode containing: the data necessary for starting up the machine in basic configuration and
○ a start-up function, using the partition accessible solely in read mode
○ a function for setting up said operating system, accessing the accessible partition in write mode and read mode, and
○ an automatic repair function, for acknowledging a fault notified by the setup function and restarting the machine after acknowledgment of the fault
- in that the mass memory (5) also comprises at least one partition (9) accessible to the operating system in write mode and read mode,
- said partition (9) accessible in write mode and read mode containing data structures updated by the operating system.

2. Data-processing machine according to Claim 1, **characterised in that** said start-up function comprises a first sequence of code for loading the contents of the partition (8) in random access memory (3) and a second sequence of code for activating said automatic repair function in random access memory.

3. Data-processing machine according to Claim 2, **characterised in that** said automatic repair function comprises a third sequence of code that calls said setup function, executable in random access memory (3) with the possibility of writing to at least one other partition (9) of the mass memory (5).

4. Data-processing machine according to Claim 1, **characterised in that** said partition (8) contains a standard acknowledgment function and **in that** the fourth sequence of code calls said standard acknowledgment function executable in random access memory with the possibility of writing to at least one other partition (9) of the mass memory.

5. Data-processing machine according to one of the preceding claims, **characterised in that** the mass memory (5) is a hard disk.

6. Method for automatically starting up a data-processing machine (1) comprising a random access memory (3) and a mass memory (5), which comprises:
- a first step (14) that starts up the machine (1) by means of a signal (7);
- a second step (15) that automatically loads into random access memory (3) the contents of a partition (8) of the mass memory (5) accessible solely in read mode, making said content accessible to the operating system in read mode and write mode;
- a third step (16) that automatically sets up an operating system from the random access memory (3) while accessing a partition accessible in write mode and read mode and containing data structures updated by the operating system;
- a fourth step (17) that automatically acknowledges any fault notified in the third step (16) and reactivates the second step (15), so as to carry out an automatic restart in the event of a fault being notified.

7. Method according to Claim 6, **characterised in that** it comprises, in the phase of manufacturing the machine (1):
- a fifth step (11) that creates partitions (8, 9) on the mass memory (5);
- a sixth step (12) that records at least one part of the operating system and functions for executing the second, third and fourth steps (15, 16, 17), on a first partition (8);
- a seventh step (14) that declares said first partition (8) to be accessible to said operating system solely in read mode.
